# EUROPÄISCHE PATENTSCHRIFT

(11) **EP 3 802 074 B1**
(45) Veröffentlichungstag und Bekanntmachung des Hinweises auf die Patenterteilung: **29.12.2021**
(21) Anmeldenummer: 19728026.6
(22) Anmeldetag: 29.05.2019
(51) Int. Cl.: D04H 3/04, B29C 70/22, B32B 5/02, B32B 5/08, B32B 5/10, B32B 5/12, B32B 5/26, D04H 1/559, B32B 7/09, B32B 15/02, B32B 15/14, B32B 15/20

(54) **MULTIAXIALWARE MIT WENIGSTENS ZWEI 0° LAGEN**
MULTIAXIAL PRODUCT HAVING AT LEAST TWO 0° LAYERS
ARTICLE MULTIAXIAL POURVU D'AU MOINS DEUX COUCHES À 0°

(30) Priorität: 07.06.2018 EP 18176535
(43) Veröffentlichungstag der Anmeldung: 14.04.2021
(73) Patentinhaber: Teijin Carbon Europe GmbH, 42103 Wuppertal (DE)
(72) Erfinder: WOCKATZ, Ronny, 91315 HÖCHSTADT (DE); REHBEIN, Johannes, 42697 Solingen (DE)
(74) Vertreter: CPW GmbH
(86) Internationale Anmeldenummer: PCT/EP2019/064032
(87) Internationale Veröffentlichungsnummer: WO 2019/233866

(56) Entgegenhaltungen:
- EP-A1- 2 152 454
- EP-A1- 3 023 241
- WO-A1-2011/113752
- DE-A1-102008 063 545
- DE-B- 1 090 166

## Beschreibung

Die Erfindung betrifft eine Multiaxialware mit wenigstens drei Fadenlagen.

Multiaxialwaren sind seit längerem bekannt.
Die EP 2547816 oder die EP 2547510 beispielsweise beschreiben Multiaxialwaren, die eine Mehrzahl von Lagen - mit unterschiedlichen Winkeln zueinander innerhalb der Multiaxialware - aufweisen.

Nachteilig bei den bekannten Multiaxialwaren ist allerdings, dass mechanische Eigenschaften der Multiaxialwaren nur in einem begrenzten Bereich einstellbar sind. Beispielsweise ist die Druckbeaufschlagung der Multiaxialware in 0°-Richtung stark von dem Flächengewicht der Fadenlage in 0°-Richtung abhängig. Die Erhöhung des Flächengewichts würde folglich eine Verbesserung der mechanischen Eigenschaften bewirken. Allerdings kann das Flächengewicht nicht ohne Probleme gesteigert werden. Ein hohes Flächengewicht führt häufig zu einer Faserablenkung oder Faserbündelung innerhalb der Lage (sogenannte Ondulation), wodurch die Fadenlage oder deren Nachbarlagen eine Welligkeit erhalten. Die Welligkeit wiederum verringert die mechanischen Eigenschaften der Fadenlage.

Aus der Schrift EP 3023241 ist ein faserverstärktes Material bekannt, dass aus Tape-Material aufgebaut sein kann und dessen verschiedene Lagen in Winkeln zueinander abgelegt werden. Gemäß dieser Schrift werden die Tapes mit einem Abstand zueinander angeordnet vorgesehen (sie bilden seperation channels). Hierdurch wird die mechanische Eigenschaft des Materials beeinflusst, da garnfreie Bereiche entstehen.

Die Aufgabe der vorliegenden Erfindung ist es daher, eine Multiaxialware bereitzustellen, die besser an mechanische Eigenschaften anpassbar ist.

Gelöst wird diese Aufgabe durch eine Multiaxialware, mit wenigstens drei Fadenlagen, wobei jede der Fadenlagen von innerhalb der Fadenlagen zueinander parallel und nebeneinander aneinander anliegend angeordneten Multifilamentverstärkungsgarnen gebildet wird, wobei wenigstens zwei Fadenlagen innerhalb der Multiaxialware so angeordnet sind, dass sie eine 0°-Richtung innerhalb der Multiaxialware definieren und wobei die wenigstens eine weitere Fadenlage in einem Winkel von mehr als ±10° zur 0°-Richtung innerhalb der Multiaxialware angeordnet ist, wobei die wenigstens zwei Fadenlagen in 0°-Richtung bezogen auf die Anordnung der wenigstens drei Fadenlagen zueinander innerhalb der Multiaxialware ohne weitere Lage aus Multifilamentverstärkungsgarnen dazwischen unmittelbar aufeinander folgen.

Mittels der Verwendung von wenigstens zwei Fadenlagen in 0°-Richtung, die innerhalb der Multiaxialware (ohne irgendeine weitere Lage aus Multifilamentverstärkungsgarnen als Fadenlage dazwischen) aufeinander folgen, können vorteilhaft die mechanischen Eigenschaften der Multiaxialware beeinflusst werden. Beispielsweise können die mindestens zwei Fadenlagen in 0°-Richtung aus unterschiedlichen Multifilamentverstärkungsgarnen aufgebaut werden, wobei sich die unterschiedlichen Garntypen nicht oder nur wenig negativ beeinflussen können, da sie nicht innerhalb einer Lage vorliegen.

Die wenigstens eine weitere Fadenlage in einem Winkel von mehr als ± 10°zur 0°-Richtung innerhalb der Multiaxialware hat bevorzugt einen Winkel von ±30°, ± 45°, ± 60° und/oder 90° zur 0°-Richtung innerhalb der Multiaxialware. Die wenigstens eine weitere Fadenlage in einem Winkel von mehr als ± 10° zur 0°-Richtung ist jedoch keine Fadenlage, die eigentlich in 0°-Richtung abgelegt werden sollte und lediglich durch Ungenauigkeiten in einen gering von der 0°-Richtung abweichenden Winkel abgelegt wurde. Die wenigstens eine weitere Fadenlage in einem Winkel von mehr als ± 10°zur 0°-Richtung wird im Folgenden auch nur als mindestens eine weitere Fadenlage bezeichnet.

Zur Klarstellung, die Multiaxialware kann eine Vielzahl von Fadenlagen aus Multifilamentverstärkungsgarnen aufweisen. Zwischen den mindestens zwei Fadenlagen, die die 0° Lagen bilden, liegen erfindungsgemäß jedoch keine Lagen (also auch keine weiteren Fadenlagen) aus Multifilamentverstärkungsgarnen mit einem Winkel von mindestens ± 10°zur 0° Lage. Zwischen den Fadenlagen in 0°-Richtung können folglich lediglich sogenannte Zwischenlagen liegen, wie beispielsweise Vlieslagen. Jede Lage, die Fasern mit einer Festigkeit von weniger als 2000 MPa und/oder eine überwiegend nicht parallele Faseranordnung innerhalb der Lage (z.B. Vliese, Wirrfaserlagen) aufweisen, soll dabei als Zwischenlage angesehen werden.

Die Fadenlagen bestehen bevorzugt aus gespreizten Multifilamentverstärkungsgarnen, die auch als Tapes bezeichnet werden können. Die Tapes haben vorzugsweise eine Breite von 80 bis 800 mm, besonders bevorzugt haben die Tapes eine Breite zwischen 250 bis 360 mm und ganz besonders bevorzugt von 600 bis 700 mm. Die gespreizten Multifilamentverstärkungsgarne werden zur Herstellung der Fadenlagen so abgelegt, dass innerhalb der Fadenlage im Wesentlichen keine Lücken (garnfreie Bereiche) vorliegen. Die Multifilamentverstärkungsgarne liegen folglich aneinander lückenlos an. In einer weiteren bevorzugten Ausführungsform bestehen die mindestens drei Fadenlagen aus jeweils einem Unidirektionalgewebe. In dem Unidirektionalgewebe liegen die Multifilamentverstärkungsgarne ebenfalls gespreizt zueinander parallel und nebeneinander aneinander anliegend vor, werden jedoch mit Hilfsgarnen verwebt, um die Stabilität der Lagen zu erhöhen.

Als Hilfsgarne können beispielsweise Bikomponentenschmelzklebegarne mit einem Titer von 200 dtex verwendet werden.

Vorzugsweise stehen die wenigstens zwei Fadenlagen in 0°-Richtung in einem direkten Kontakt zueinander in der Multiaxialware. Unter einem "direkten Kontakt" soll dabei verstanden werden, dass die wenigstens zwei Fadenlagen in 0°-Richtung in der Multiaxialware ohne jede weitere Zwischenlage (auch ohne Vlies) zwischen den wenigstens zwei Fadenlagen in 0°-Richtung aufeinander aufliegen.

Bevorzugt weisen die wenigstens zwei Fadenlagen in 0°-Richtung jeweils ein Flächengewicht von wenigstens 100 g/m², bevorzugter von wenigstens 150 g/m² und besonders bevorzugt von wenigstens 180 g/m² auf. In einer bevorzugten Ausführungsform weisen alle Fadenlagen in 0°-Richtung dasselbe Flächengewicht auf. Denkbar wäre jedoch auch, dass die wenigstens zwei Fadenlagen in 0°-Richtung unterschiedliche Flächengewichte aufweisen. Da mindestens zwei Fadenlagen in 0°-Richtung für die Multiaxialware verwendet werden, können vorteilhafterweise hohe Flächengewichte in 0°-Richtung erzielt werden, so dass beispielsweise die Druckfestigkeit in 0°-Richtung erhöht wird. Gegenüber der Verwendung einer einzigen Lage mit hohem Flächengewicht ergibt sich jedoch der Vorteil, dass beispielsweise eine Fadenondulation nicht oder nur sehr gering in den einzelnen Fadenlagen in 0°-Richtung oder deren Nachbarlagen stattfindet.

Vorzugsweise weist die mindestens eine weitere Fadenlage ein Flächengewicht von wenigstens 100 g/m², besonders bevorzugt von wenigstens 120 g/m² auf. Bei der Verwendung von einer Mehrzahl von solchen weiteren Fadenlagen können alle Fadenlagen jeweils das gleiche Flächengewicht aufweisen oder unterschiedliche Flächengewichte haben.

Vorzugsweise weisen die wenigstens drei Fadenlagen als Multifilamentverstärkungsgarn Kohlenstofffaser-, Glasfaser,- Aramidgarne und/oder hochverstreckte UHMW-Polyethylengarn oder Mischungen aus den genannten Garnen auf. Besonders bevorzugt bestehen die wenigstens drei Fadenlagen zu mindestens 90% aus den genannten Fasern beziehungsweise aus den Garnen oder Mischungen der genannten Fasern oder Garne.

In einer bevorzugten Ausführungsform weisen die wenigstens zwei Fadenlagen in 0°-Richtung dieselben Faserarten oder Garnart auf, wie die mindestens eine weitere Fadenlage. Die unterschiedlichen Fadenlagen können hinsichtlich des verwendeten Garntiters gleich oder unterschiedlich sein.

Vorzugsweise sind die Multifilamentverstärkungsgarne Kohlenstofffasergarne mit einer Festigkeit von mindestens 5000 MPa, gemessen nach JIS-R- 7608 und einem Zugmodul von mindestens 260 GPa, gemessen nach JIS-R- 7608. Bezüglich dieses verwendeten Kohlenstofffasergarns wird auf die noch unveröffentlichte japanische Anmeldung mit dem Aktenzeichen JP 2017-231749 verwiesen. Weiterhin bevorzugt sind die Multifilamentverstärkungsgarne Kohlenstofffasergarne mit einer Festigkeit von mindestens 4500 MPa, gemessen nach JIS-R- 7608 und einem Zugmodul von mindestens 240 GPa, gemessen nach JIS-R- 7608.

Bevorzugt weist die Multiaxialware mindestens eine Vlieslage auf. Vorzugsweise ist wenigstens ein Vlies auf, unter und/oder zwischen den wenigstens drei Fadenlagen angeordnet. Besonders bevorzugt ist zwischen jeder Fadenlage ein Vlies angeordnet und/oder die Multiaxialware weist an der Oberseite und/oder an der Unterseite jeweils ein weiteres Vlies auf. Es soll dabei deutlich werden, dass auch zwischen zwei Fadenlagen in 0°-Richtung, die bezogen auf die Anordnung der wenigstens drei Fadenlagen zueinander unmittelbar aufeinander folgen (in der Multiaxialware), ein Vlies angeordnet sein kann (außer im Ausführungsbeispiel, bei dem die Fadenlagen in 0°-Richtung in einem direkten Kontakt zueinander stehen). Weiterhin bevorzugt weist die Multiaxialware einen Pulverbinder auf. Beispielsweise kann ein Vlies einen Pulverbinder aufweisen. Bevorzugt weist das wenigstens eine Vlies ein Flächengewicht von 3 bis 25 g/m² auf. In einer Ausführungsform mit mehr als einem Vlies können alle verwendeten Vlieslagen das gleiche Flächengewicht oder unterschiedliche Flächengewichte aufweisen. Ein besonders bevorzugter Aufbau der Multiaxialware ergibt sich wie folgt:
- Wenigstens eine weitere Fadenlage
- Vlies
- Wenigstens eine weitere Fadenlage
- Vlies
- Fadenlage in 0°-Richtung
- Vlies
- Fadenlage in 0°-Richtung
- Vlies mit Pulverbinder

In einer Ausführungsform weist die Multiaxialware ein Metallgitter auf. Bevorzugt ist das Metallgitter auf und/oder unter den wenigstens drei Fadenlagen angeordnet. Vorzugsweise bildet das Metallgitter eine äußerste Lage der Multiaxialware. Besonders bevorzugt weist das Metallgitter ein Flächengewicht von 50 bis 250 g/m², besonders bevorzugt von 70 bis 175 g/m² und ganz besonders bevorzugt von 90 bis 139 g/m², auf. Das Metallgitter ist bevorzugt mit einer oder mehreren Fadenlagen verbunden, beispielsweise durch Vernähung oder durch ein Wirkfadensystem, das die Multiaxialware zusammenhält. Durch das Metallgitter kann vorteilhafterweise die Leitfähigkeit der Multiaxialware verbessert werden, was insbesondere für Anwendungen im Bereich der Luft- und Raumfahrt vorteilhaft ist. Vorzugsweise ist das Metallgitter ein Kupfergitter.

Vorzugsweise besteht das wenigstens eine Vlies aus mindestens einer ersten und einer zweiten thermoplastischen Polymerkomponente, wobei die erste und die zweite Polymerkomponente unterschiedliche Schmelztemperaturen aufweisen.

Vorzugsweise weist die Polymerkomponente mit niedrigerer Schmelztemperatur eine Schmelztemperatur im Bereich zwischen 80 und 135°C auf und/oder die Polymerkomponente mit höherer Schmelztemperatur weist eine Schmelztemperatur im Bereich zwischen 140 und 250°C auf.

Bevorzugt ist die erste Polymerkomponente in Epoxid-, Cyanatester-, oder Benzoxazin-Matrixharzen oder in Mischungen dieser Matrixharze löslich und die zweite Polymerkomponente ist in Epoxid-, Cyanatester-, oder Benzoxazin-Matrixharzen oder in Mischungen dieser Matrixharze unlöslich.

In einer Ausführungsform ist die erste Polymerkomponente ein Polyamid und/oder das Vlies weist ein Epoxid auf. Besonders bevorzugt liegt das Epoxid als Pulverbinder vor, das auf das Vlies aufgestreut und thermisch mit diesem verbunden wurde.

Sofern ein Bindermaterial in irgendeiner Ausführungsform in Partikelform verwendet wird, liegt die bevorzugte Partikelgröße in einem Bereich von 50 - 160 µm, besonders bevorzugt zwischen 80-140 µm.

Für alle Ausführungsformen mit Vlies gilt, dass bei der Verwendung von mehr als einer Vlieslage jeweils unterschiedliche Vliese oder die gleichen Vliese für die Multiaxialware verwendet werden können. Bei der Verwendung von unterschiedlichen Vlieslagen können sich die Vlieslagen hinsichtlich ihres Flächengewichts, ihres Materials und/oder ihres Aufbaus unterscheiden.

Die vorgeschlagene Multiaxialware hat gegenüber den bisher bekannten Multiaxialwaren den Vorteil, ein gleichmäßiges Fadenbild bei gleichzeitig hohem Faservolumenanteil zu haben, da die Gefahr der Ondulation verringert wird. Hierdurch kann insbesondere die Druckfestigkeit der Multiaxialware erhöht werden. Die vorgeschlagene Multiaxialware lässt sich zudem leichter drapieren im Vergleich zu Multiaxialwaren mit vergleichbarem Flächengewicht, aber weniger Fadenlagen sowie durch den Einsatz von bereits vorfixierten 0°-Lagen (z.B. als UD Tape, fixiert mittels Schussfaden, Pulverbinder oder eines thermoplastischen Gitters).

Ein weiterer Gegenstand der vorliegenden Erfindung betrifft ein Verfahren zur Herstellung einer Multiaxialware, wie sie vorhergehend beschrieben wurde.

Zur Herstellung der Multiaxialware werden wenigstens drei Fadenlagen abgelegt, wobei jede der Fadenlagen von innerhalb der Fadenlagen zueinander parallel und nebeneinander aneinander anliegend angeordneten Multifilamentverstärkungsgarnen gebildet wird, wobei bei der Herstellung der Multiaxialware wenigstens zwei Fadenlagen in einer 0°-Richtung abgelegt werden, wobei auf und/oder unter aller der wenigstens zwei Fadenlagen in 0°-Richtung wenigstens eine weitere Fadenlagen in einem Winkel von mehr als ±10° zur 0°-Richtung innerhalb der Multiaxialware abgelegt wird.

Die wenigstens drei Fadenlagen zur Herstellung der Multiaxialware können erst während der Herstellung der Multiaxialware gebildet werden (online) oder bereits als vorkonfektionierte Ware (beispielsweise Tape) zur Herstellung der Multiaxialware im Herstellungsprozess als fertige Lage (offline) abgelegt werden.

Die wenigstens zwei Fadenlagen in 0°-Richtung werden ohne eine weitere Fadenlage (mit Multifilamentverstärkungsgarnen angeordnet in einem Winkel von mehr als ± 10° zur 0°-Richtung) dazwischen aufeinander abgelegt. Die wenigstens eine weitere Fadenlage kann folglich auf oder unter den wenigstens zwei Fadenlagen in 0°-Richtung angeordnet werden. Wird mehr als eine weitere Fadenlage verwendet, befinden sich die weiteren Fadenlagen auf und/oder unter den Fadenlagen in 0°-Richtung, jedoch nie dazwischen. Bei der Verwendung von mehr als einer weiteren Fadenlage kann die so hergestellte Multiaxialware einen symmetrischen Aufbau um die wenigstens zwei Fadenlagen in 0°- Richtung aufweisen. Ein symmetrischer Aufbau, um die 0°-Richtung ist beispielsweise bei einer Multiaxialware mit folgendem Aufbau gegeben: +45°/0°/0°/-45°.

Vorzugsweise wird bei der Herstellung der Multiaxialware mindestens eine Vlieslage zwischen eine der Fadenlagen abgelegt. Vorzugsweise werden Vlieslagen zwischen alle Fadenlagen und/oder als letzte Lage einseitig oder beidseitig auf die äußeren Fadenlagen abgelegt. Bezüglich der verwendeten Vliese als Vlieslagen soll auf die bereits beschriebenen Ausführungen zu den Vliesen der Multiaxialware verwiesen werden.

Auf eine Außenseite der Multiaxialware kann in einem Ausführungsbeispiel zudem ein Metallgitter abgelegt werden. Für die Ausgestaltung des Metallgitters wird auf das bereits zum Metallgitter der Multiaxialware geschriebene verwiesen.

In einer bevorzugten Ausführungsform wird jede der wenigstens zwei in 0°-Richtung abgelegten Fadenlagen durch jeweils eine Ablegevorrichtung abgelegt. Bei der Verwendung von bereits vorkonfektionierten Fadenlagen werden folglich für jede Fadenlage in 0°-Richtung eine Ablegevorrichtung mit aufgewickelter Fadenlage verwendet.

In einer anderen Ausführungsform werden die wenigstens zwei Fadenlagen in 0°-Richtung mittels jeweils einem Stehfadengatter bei der Herstellung der Multiaxialware erzeugt, wenn eine Online Zuführung vorgesehen ist.

In einer weiteren Ausführungsform werden die wenigstens zwei Fadenlagen in 0°-Richtung als sogenanntes Unidirektionalgewebe bei der Herstellung der Multiaxialware abgelegt. Bei der Herstellung wird dann jedes Unidirektionalgewebe als Fadenlage in 0°-Richtung bevorzugt durch eine eigene Ablegevorrichtung im Herstellungsprozess abgelegt.

Ein weiterer Gegenstand der vorliegenden Erfindung betrifft einen faserverstärkten Komposit, der mindestens eine Multiaxialware gemäß dem eben beschriebenen enthält. Vorzugsweise weist der Komposite eine Vielzahl von Fadenlagen aus Multifilamentverstärkungsgarnen und Vlieslagen dazwischen auf. Besonders bevorzugt weist der Komposit ein weiteres oder zusätzliches Matrixmaterial auf, mit denen die Fadenlagen und die Vlieslagen imprägniert sind.

Ein weiterer Gegenstand der vorliegenden Erfindung ist daher auch ein Verfahren zur Herstellung des Komposits mittels eines zusätzlichen Matrixmaterials. Vorzugsweise werden hierfür eine Vielzahl von Multiaxialwaren der oben genannten Art aufeinandergeschichtet und mittels Wärme und Druck und eines zusätzlichen Matrixmaterials zu einem Bauteil (Komposit) verfestigt. Ein solches Komposit kann beispielsweise im Bereich der Luft- und Raumfahrt oder im Bereich Automobil als Bauteil verwendet werden.

## Patentansprüche

1. Multiaxialware mit wenigstens drei Fadenlagen, wobei jede der Fadenlagen von innerhalb der Fadenlagen zueinander parallel und nebeneinander aneinander anliegend angeordneten Multifilamentverstärkungsgarnen gebildet wird, wobei wenigstens zwei Fadenlagen innerhalb der Multiaxialware so angeordnet sind, dass sie eine 0°-Richtung innerhalb der Multiaxialware definieren und wobei die wenigstens eine weitere Fadenlage in einem Winkel von mehr als ±10° zur 0°-Richtung innerhalb der Multiaxialware angeordnet ist, wobei die wenigstens zwei Fadenlagen in 0°-Richtung bezogen auf die Anordnung der wenigstens drei Fadenlagen zueinander innerhalb der Multiaxialware ohne weitere Lage aus Multifilamentverstärkungsgarnen dazwischen unmittelbar aufeinander folgen.

2. Multiaxialware nach Anspruch 1, wobei die wenigstens zwei Fadenlagen in 0°-Richtung in einem direkten Kontakt zueinander in der Multiaxialware stehen.

3. Multiaxialware nach Anspruch 1 oder 2, wobei die wenigstens zwei Fadenlagen in 0°-Richtung jeweils ein Flächengewicht von wenigstens 150 g/m², vorzugsweise von wenigstens 180 g/m² aufweisen und/oder die in einem Winkel von mehr als ±10° zur 0°-Richtung innerhalb der Multiaxialware angeordneten wenigstens eine weitere Fadenlage jeweils ein Flächengewicht von wenigstens 100 g/m², vorzugsweise von wenigstens 120 g/m² aufweist.

4. Multiaxialware nach einem der vorhergehenden Ansprüche, wobei die Multifilamentverstärkungsgarne Kohlenstofffaser-, Glasfaser- oder Aramidgarne oder hochverstreckte UHMW-Polyethylengarne sind.

5. Multiaxialware nach einem der vorhergehenden Ansprüche, wobei die Multifilamentverstärkungsgarne Kohlenstofffasergarne mit einer Festigkeit von mindestens 5000 MPa, gemessen nach JIS-R- 7608 und einem Zugmodul von mindestens 260 GPa, gemessen nach JIS-R- 7608 sind und/oder Kohlenstofffasergarne mit einer Festigkeit von mindestens 4500 MPa, gemessen nach JIS-R-7608 und einem Zugmodul von mindestens 240 GPa, gemessen nach JIS-R- 7608.

6. Multiaxialware nach einem der vorhergehenden Ansprüche, wobei auf, unter und/oder zwischen den wenigstens drei Fadenlagen wenigstens ein Vlies angeordnet ist und/oder wenigstens ein Metallgitter auf und/oder unter den wenigstens drei Fadenlagen angeordnet ist.

7. Multiaxialware nach Anspruch 6, wobei das wenigstens eine Vlies ein Flächengewicht im Bereich von 3 und 25 g/m² aufweist und/oder das Metallgitter ein Flächengewicht von 60 -200 g/m² aufweist

8. Multiaxialware nach Anspruch 6 oder 7, wobei das wenigstens eine Vlies aus mindestens einer ersten und einer zweiten thermoplastischen Polymerkomponente besteht, wobei die erste und die zweite Polymerkomponente unterschiedliche Schmelztemperaturen aufweisen.

9. Multiaxialware nach Anspruch 8, wobei die Polymerkomponente mit niedrigerer Schmelztemperatur eine Schmelztemperatur im Bereich zwischen 80 und 135°C aufweist und/oder die Polymerkomponente mit höherer Schmelztemperatur eine Schmelztemperatur im Bereich zwischen 140 und 250°C aufweist und/oder wobei die erste Polymerkomponente ein Polyamid ist und/oder das Vlies ein Epoxid aufweist.

10. Multiaxialware nach Anspruch 9, wobei die erste Polymerkomponente in Epoxid-, Cyanatester-, oder Benzoxazin-Matrixharzen oder in Mischungen dieser Matrixharze löslich und die zweite Polymerkomponente in Epoxid-, Cyanatester-, oder Benzoxazin-Matrixharzen oder in Mischungen dieser Matrixharze unlöslich ist.

11. Multiaxialware nach mindestens einem der vorhergehenden Ansprüche, wobei das wenigstens eine Vlies ein Bindermaterial in Partikelform aufweist, wobei die Partikelgröße des Bindermaterials zwischen 50 - 160 µm liegt.

12. Faserverstärkter Komposit, wobei der Komposit mindestens eine Multiaxialware nach mindestens einem der Ansprüchen 1 bis 11 aufweist.

13. Verfahren zur Herstellung einer Multiaxialware nach Anspruch 1 aus wenigstens drei Fadenlagen, wobei jede der Fadenlagen von innerhalb der Fadenlagen zueinander parallel und nebeneinander aneinander anliegend angeordneten Multifilamentverstärkungsgarnen gebildet wird, wobei bei der Herstellung der Multiaxialware wenigstens zwei Fadenlagen in einer 0°-Richtung abgelegten werden, wobei auf oder unter aller der wenigstens zwei Fadenlagen in 0°-Richtung wenigstens eine weitere Fadenlagen in einem Winkel von mehr als ±10° zur 0°-Richtung innerhalb der Multiaxialware abgelegt wird.

14. Verfahren nach Anspruch 13, wobei auf, unter und/oder zwischen den wenigstens drei Fadenlagen wenigstens ein Vlies abgelegt wird und/oder wobei jede der wenigstens zwei in 0°-Richtung abgelegten Fadenlagen durch jeweils eine Ablagevorrichtung abgelegt wird.

15. Verfahren zur Herstellung des Komposites gemäß Anspruch 12, wobei mindestens eine Multiaxialware nach mindestens einem der Ansprüchen 1 bis 11 und ein zusätzliches Matrixmaterial verwendet werden.

## Claims

1. Multiaxial product having at least three thread layers, wherein each of the thread layers is formed by multifilament reinforcing yarns arranged alongside and parallel to another within the thread layers, wherein at least two thread layers within the multiaxial product are arranged such that they define a 0° direction within the multiaxial product and wherein the at least one further fibre layer is arranged at an angle of more than ± 10° to the 0° direction within the multiaxial product, wherein the at least two thread layers in 0° direction with regard to the arrangement of the at least three thread layers with regard to one another within the multiaxial product are consecutive to one another directly without a further layer of multifilament reinforcing yarns therebetween.

2. Multiaxial product according to claim 1, wherein the at least two thread layers in 0° direction are in direct contact to one another in the multiaxial product.

3. Multiaxial product according to claim 1 or 2, wherein the at least two thread layers in 0° direction have in each case a basis weight of at least 150 g/m², preferably of at least 180 g/m² and/or the at least one further fibre layer arranged at an angle of more than ± 10° to the 0° direction within the multiaxial product has in each case a basis weight of at least 100 g/m², preferably of at least 120 g/m².

4. Multiaxial product according to any of the preceding claims, wherein the multifilament reinforcing yarns are carbon fibre, glass fibre or aramid yarns or highly stretched UHMW-polyethylene yarns.

5. Multiaxial product according to any of the preceding claims, wherein the multifilament reinforcing yarns are carbon fibre yarns with a strength of at least 5000 MPa, measured according to JIS-R-7608 and a tensile module of at least 260 GPa, measured according to JIS-R-7608 and/or carbon fibre yarns with a strength of at least 4500 MPa, measured according to JIS-R-7608 and a tensile module at least 240 GPa, measured according to JIS-R-7608.

6. Multiaxial product according to any of the preceding claims, wherein on, below and/or between the at least three thread layers is arranged at least one nonwoven and/or at least one metal mesh is arranged on and/or below at least three thread layers.

7. Multiaxial product according to claim 6, wherein the at least one nonwoven has a basis weight in the range of 3 and 25 g/m² and/or the metal mesh has a basis weight of 60-200 g/m².

8. Multiaxial product according to claim 6 or 7, wherein the at least one nonwoven consists of at least one first and one second thermoplastic polymer component, wherein the first and the second polymer components have different melting temperatures.

9. Multiaxial product according to claim 8, wherein the polymer component with a lower melting temperature has a melting temperature in the range between 80 and 135°C and/or the polymer component with a higher melting temperature has a melting temperature in the range between 140 and 250°C and/or wherein the first polymer component is a polyamide and/or the nonwoven has an epoxy.

10. Multiaxial product according to claim 9, wherein the first polymer component is soluble in epoxy, cyanate ester or benzoxazine matrix resins or in mixtures of these matrix resins, and the second polymer component is insoluble in epoxy, cyanate ester or benzoxazine matrix resins or in mixtures of these matrix resins.

11. Multiaxial product according to at least one of the preceding claims, wherein the at least one nonwoven has a binding material in particulate form, wherein the particle size of the binding material is between 50 - 160 µm.

12. Fibre reinforced composite, wherein the composite has at least one multiaxial product according to at least one of claims 1 to 11.

13. Method for producing a multiaxial product according to claim 1 from at least three thread layers, wherein each of the thread layers is formed by multifilament reinforcing yarns arranged alongside and parallel to another within the thread layers, wherein in the production of the multiaxial product at least two thread layers are deposited in a 0° direction and wherein on or below all of the at least two thread layers in 0° direction, at least one further thread layer is deposited at an angle of more than ± 10° to the 0° direction within the multiaxial product.

14. Method according to claim 13, wherein on, below and/or between the at least three thread layers is deposited at least one nonwoven and/or wherein each of the at least two thread layers deposited in 0° direction is deposited by in each case one depositing device.

15. Method for producing the composite according to claim 12, wherein at least one multiaxial product according to at least one of claims 1 to 11 and an additional matrix material are used.

## Revendications

1. Article multiaxial avec au moins trois couches de fils, dans lequel chacune des couches de fils est formée par des fils de renforcement multifilaments agencés reposant les uns contre les autres les uns à côté des autres et parallèlement les uns aux autres à l'intérieur des couches de fils, dans lequel au moins deux couches de fils sont agencées dans l'article multiaxial de sorte qu'elles définissent une direction à 0° dans l'article multiaxial et dans lequel l'au moins une autre couche de fils est agencée dans un angle de plus de ±10° par rapport à la direction à 0° dans l'article multiaxial, dans lequel les au moins deux couches de fils se suivent directement dans la direction à 0° par rapport à l'agencement des au moins trois couches de fils les unes par rapport aux autres dans l'article multiaxial sans autre couche de fils de renforcement multifilaments entre elles.

2. Article multiaxial selon la revendication 1, dans lequel les au moins deux couches de fils dans la direction à 0° sont en contact direct l'une avec l'autre dans l'article multiaxial.

3. Article multiaxial selon la revendication 1 ou 2, dans lequel les au moins deux couches de fils dans la direction à 0° présentent respectivement un grammage d'au moins 150 g/m², de préférence d'au moins 180 g/m² et/ou l'au moins une autre couche de fils agencée dans un angle de plus de ±10° à la direction à 0° dans l'article multiaxial présente respectivement un grammage d'au moins 100 g/m², de préférence d'au moins 120 g/m².

4. Article multiaxial selon l'une quelconque des revendications précédentes, dans lequel les fils de renforcement multifilaments sont des fils de fibres de carbone, fibres de verre ou fils d'aramide ou fils de polyéthylène UHMW hautement étirés.

5. Article multiaxial selon l'une quelconque des revendications précédentes, dans lequel les fils de renforcement multifilaments sont des fils de fibre de carbone avec une résistance d'au moins 5 000MPa, mesurée selon JIS-R-7608 et un module de traction d'au moins 260 GPa, mesuré selon JIS-R-7608 et/ou des fils de fibres de carbone avec une résistance d'au moins 4 500 MPa, mesurée selon JIS-R-7608 et un module de traction d'au moins 240 GPa, mesuré selon JIS-R-7608.

6. Article multiaxial selon l'une quelconque des revendications précédentes, dans lequel au moins un non-tissé est agencé sur, sous et/ou entre les au moins trois couches de fils et/ou au moins une grille métallique est agencée sur et/ou sous les au moins trois couches de fils.

7. Article multiaxial selon la revendication 6, dans lequel l'au moins un non-tissé présente un grammage dans la plage de 3 et 25 g/m² et/ou la grille métallique présente un grammage de 60 à 200 g/m².

8. Article multiaxial selon la revendication 6 ou 7, dans lequel l'au moins un non-tissé consiste en au moins un premier et un second composant polymère thermoplastique, dans lequel le premier et le second composant polymère présentent différentes températures de fusion.

9. Article multiaxial selon la revendication 8, dans lequel le composant polymère avec une température de fusion plus faible présente une température de fusion dans la plage entre 80 et 135 °C et/ou le composant polymère avec une température de fusion plus élevée présente une température de fusion dans la plage entre 140 et 250°C et/ou dans lequel le premier composant polymère est un polyamide et/ou le non-tissé présente un époxy.

10. Article multiaxial selon la revendication 9, dans lequel le premier composant polymère est soluble dans des résines époxy, d'ester de cyanate ou de matrice de benzoxazine ou dans des mélanges de ces résines de matrice et le second composant polymère est insoluble dans des résines époxy, d'ester de cyanate ou de matrice de benzoxazine ou dans des mélanges de ces résines de matrice.

11. Article multiaxial selon au moins l'une quelconque des revendications précédentes, dans lequel l'au moins un non-tissé présente un matériau de liant sous la forme particulaire, dans lequel la grandeur de particule du matériau de liant est comprise entre 50 et 160 µm.

12. Composite renforcé par des fibres, dans lequel le composite présente au moins un article multiaxial selon au moins l'une quelconque des revendications 1 à 11.

13. Procédé de fabrication d'un article multiaxial selon la revendication 1 à partir de trois couches de fils, dans lequel chacune des couches de fils est formée par des fils de renforcement multifilaments agencés reposant les uns contre les autres les uns à côté des autres et parallèlement les uns aux autres à l'intérieur des couches de fils, dans lequel lors de la fabrication de l'article multiaxial au moins deux couches de fils sont déposées dans une direction à 0°, dans lequel sur ou sous toutes les au moins deux couches de fils dans la direction à 0° au moins une autre couche de fils est déposée dans un angle de plus de ±10° par rapport à la direction à 0° dans l'article multiaxial.

14. Procédé selon la revendication 13, dans lequel au moins un non-tissé est déposé sur, sous et/ou entre les au moins trois couches de fils et/ou dans lequel chacune des au moins deux couches de fils déposées dans la direction à 0° est déposée par respectivement un dispositif de dépôt.

15. Procédé de fabrication du composite selon la revendication 12, dans lequel au moins un article multiaxial selon au moins l'une des revendications 1 à 11 et un matériau de matrice supplémentaire sont utilisés.
